# EUROPÄISCHE PATENTSCHRIFT

(11) **EP 2 849 562 B1**
(45) Veröffentlichungstag und Bekanntmachung des Hinweises auf die Patenterteilung: **06.03.2019**
(21) Anmeldenummer: 13723103.1
(22) Anmeldetag: 14.05.2013
(51) Int. Cl.: A01N 25/04, A01N 53/00, A01N 25/18, A01N 25/20, A01N 25/34

(54) **INSEKTIZIDE ÖL-IN-WASSER (O/W) FORMULIERUNG**
INSECTICIDAL OIL IN WATER FORMULA
FORMULE INSECTICIDE HUILE DANS L'EAU

(30) Priorität: 16.05.2012 EP 12168251
(43) Veröffentlichungstag der Anmeldung: 25.03.2015
(73) Patentinhaber: Bayer CropScience AG, 40789 Monheim am Rhein (DE)
(72) Erfinder: KIJLSTRA, Johan, 51519 Odenthal (DE); AKLE, Francois, F-69130 Ecully (FR); BERNI, José, F-30300 Beaucaire (FR); HEINRICH, Jean-Luc, F-34200 Sete (FR)
(74) Vertreter: BIP Patents
(86) Internationale Anmeldenummer: PCT/EP2013/059920
(87) Internationale Veröffentlichungsnummer: WO 2013/171201

(56) Entgegenhaltungen:
- WO-A2-2007/131679
- DE-A1-102006 023 413
- FR-A- 992 736
- GB-A- 727 577
- US-A1- 2008 318 786

## Beschreibung

Die Erfindung betrifft eine insektizide Öl-in-Wasser (O/W) Formulierung mit mindestens einem insektiziden Wirkstoff und mindestens einem Brandsalz sowie die Herstellung dieser Formulierung. Die erfindungsgemäße Formulierung eignet sich insbesondere zur Behandlung von geeigneten Trägermaterialen, insbesondere von Papierträgern in einem kostengünstigen Einschrittprozess mit Hilfe konventioneller Applikationsmethoden. Darüber hinaus betrifft die vorliegende Erfindung insektizide, glimmbare Produkte, welche durch die Behandlung eines Trägermaterials mit der erfindungsgemäßen Formulierung hergestellt werden.

EP-A-1339281 beschreibt eine O/W-Formulierungen mit dem Pyrethroid Deltamethrin, welches eine deutlich verringerte Toxizität aufweist, da es auf der Basis von Carbonsäureestern als organisches Lösungsmittel hergestellt werden kann. EP-A-1339281 beansprucht eine Öl-in-Wasser-Emulsionsformulierung umfassend a) ein oder mehrere Insektizide, insbesondere Pyrethroide; b) ein oder mehrere Lösungsmittel aus der Gruppe von Estern von aliphatischen Monocarbonsäuren, Estern von aliphatischen Dicarbonsäuren, Estern von aromatischen Monocarbonsäuren, Estern von aromatischen Dicarbonsäuren und Tri-n-alkylphosphaten; c) ein Emulgatorsystem, das ein oder mehrere anionische grenzflächenaktive Mittel und zwei oder mehrere nichtionische grenzflächenaktive Mittel umfaßt, von denen eines einen HLB-Wert zwischen 4 und 12 und eines einen HLB-Wert zwischen 12 und 20 aufweist; d) einen oder mehrere Filmbildner/Verdicker; und e) Wasser. Der HLB-Wert (Hydrophilität-Lipophilitäts-Verhältnis) ist eine von W. C. Griffin (J. Soc. Cosmetic Chemists, 1, 311 (1949)) definierte empirische Skala, die die amphiphile Natur von emulgierenden Mitteln (insbesondere von nichtionischen grenzflächenaktiven Mitteln) ausdrückt. Den am wenigsten hydrophilen grenzflächenaktiven Mitteln werden die niedrigsten HLB-Werte zugeordnet. Die in EP-A-1139281 beschriebene O/W-Formulierung ist für Sprühanwendungen für den Endverbraucher geeignet, um Nutzpflanzen vor Schädlingen zu schützen.

WO-A-2007/131679 beschreibt ein mit einem insektiziden Wirkstoff getränktes Papier. Das Papier wird dabei in einem Zweischrittverfahren hergestellt, bei dem zunächst das Papier mit einer wässrigen 6%igen_Kaliumnitratlösung vorbehandelt, danach getrocknet und dann in einem weiteren Schritt mit einer Wirkstofflösung imprägniert wird.

WO-A-2011/092722 beschreibt ein mit einem insektiziden Wirkstoff getränktes Papier, das auch in einem Zweischrittverfahren hergestellt wird. Analog dem Verfahren der WO-A-2007/131679 wird zunächst das Papier mit einem Kaliumnitrat behandelt, bevor das Papier nach Trocknung mit dem Wirkstoff imprägniert wird.

Aufgabe der vorliegenden Erfindung war es eine Formulierung zur Verfügung zu stellen, die angesichts eines insektiziden Wirkstoffs (d.h. z.B. eines Pyrethroides) und eines Brandsalzes physikalisch-chemisch stabil ist und sich insbesondere für die Behandlung eines Trägermaterials wie beispielsweise eines Papiers eignet. Die Formulierung soll es vorzugsweise ermöglichen, dass das Trägermaterial in einem kostengünstigen und industriell robustem Einschrittprozess behandelt werden kann. Bei diesem Einschrittprozess wird das erforderliche Auftragsgewicht der erfindungsgemäßen Formulierung in einem Verfahrenschritt auf das Trägermaterial appliziert, so dass das Trägermaterial danach ausreichend und homogen verteilt die funktionellen Formulierungskomponenten wie bespielweise den Wirkstoff und das Brandsalz enthält.

Die im Stand der Technik beschriebenen Formulierungen eignen sich für die Lösung dieser Aufgabe nicht. Insbesondere ist es mit diesen bekannten Formulierungen nicht möglich, den insektiziden Wirkstoff gemeinsam mit dem erforderlichen Brandsalz in einer Formulierung zu kombinieren und für den erfindungsgemäßen Zweck einzusetzen. Insbesondere sind solche Formulierungen nicht physikalisch-chemisch ausreichend stabil (gegenüber Koaleszens und Aufrahmung) und haben nicht die für den erfindungsgemäß erforderlichen Zweck notwendigen rheologischen Eigenschaften bzw. können nicht ohne Weiteres an konventionelle Maschinen und Methoden zur Applikation der Formulierung auf ein geeignetes Trägermaterial angepasst werden.

Überraschenderweise wurde nun gefunden, dass die Aufgabe durch eine Öl-in-Wasser (O/W) Formulierung umfassend
a) mindestens ein Polyvinylalkohol und ein nichtionischer ethoxylierter Emulgator, wobei der mindestens ein Polyvinylalkohol eine Viskosität nach DIN 53015 von 1 bis 60 mPa • s und eine Esterzahl nach DIN EN ISO 3681 zwischen 40 und 450 hat und der nichtionische ethoxylierte Emulgator ein Alkanolethoxylat oder ein Ethyleneoxid/Propylenoxidblockcopolymer ist,
b) mindestens ein nicht-wässriges Lösungsmittel,
c) mindestens ein Brandsalz,
d) mindestens ein insektizider Wirkstoff, wobei der mindestens eine insektizide Wirkstoff ein Pyrethroid ist,
   und
e) Wasser,
gelöst wird.

Eine O/W-Formulierung beschreibt generell ein Mehrphasen-System, bei der eine Ölphase in einer kontinuierlichen Wasserphase dispergiert vorliegt. Der Begriff "Öl" steht in diesem Kontext übergreifend für wasserunlösliche Flüssigkeiten und Lösungsmittel, welche in der Mischung mit Wasser oder wässrige Salzlösungen eine Phasentrennung bewirken. Beispielweise sind aliphatische und aromatische Lösungsmittel, pflanzliche und tierische Öle und deren Derivate und Duftstoffe oder Mischungen davon.

Experimentell wird die Differenzierung zwischen W/O- und O/W-Formulierungen über die Bestimmung der spezifischen Leitfähigkeit bestimmt. Wässrige Salzlösungen mit einer Salzkonzentration von 5 Gew.% und höher haben typischerweise eine hohe spezifische Leitfähigkeit im mS/cm-Bereich, während die spezifische Leitfähigkeit von aliphatischen und aromatischen Lösungsmittel typischerweise im µS/cm-Bereich oder darunter liegen. Daraus folgend wird eine brandsalzhaltige Formulierung experimentell als O/W Formulierung eingestuft, wenn deren spezifischen Leitfähigkeit höher als 0,1 mS/cm ist. Die Leitfähigkeit der vorliegenden erfindungsgemäßen O/W Formulierung ist deshalb vorzugsweise höher als 0,1 mS/cm, gemessen bei Raumtemperatur (20°C).

Als Polyvinylalkohole kommen erfindungsgemäß solche Verbindungen in Betracht, die durch partielle oder komplette Verseifung von Polyvinylacetat erhalten werden. Somit handelt es sich um Polyvinylalkohole mit unterschiedlichem Polymerisations- und Hydrolysegraden. Es handelt es sich um Polyvinylalkohole mit einer Viskosität nach DIN 53015 von 1 bis 60 mPa • s, vorzugsweise zwischen 1 bis 20 mPa • s und noch bevorzugter zwischen 1 und 10 mPa • s (in einer 4%igen wässrigen Lösung bei 20°C); einer Esterzahl nach DIN EN ISO 3681 zwischen 40 und ca. 450 vorzugsweise von mindestens 140 mg KOH/g. Die Esterzahl gibt die Menge an KOH in mg an, die zur Verseifung von 1 g Polyvinylalkohol verbraucht wird. Solche Polyvinylalkohole sind im Handel erhältlich, z.B. unter dem Namen Mowiol und Polyviol. Als besonders geeignet haben sich teilhydrolysierten Typen wie Mowiol 3-85* (erhältlich von Kuraray Specialties Europe) erwiesen.

Erfindungsgemäß umfasst die O/W-Formulierung vorzugsweise 0,1 bis 10 Gew.-%, vorzugsweise 0,5 bis 8 Gew.-% stärker bevorzugt im Ausmaß von 1,0 bis 6 Gew.-% des Polyvinylalkohols. Erfindungsgemäß geeignete nichtionische ethoxylierte Emulgatoren sind aus ethoxyliertem Alkohol (d.h. Alkanolethoxylate) oder Emulgatoren aus Ethyleneoxid/Propylenoxidblockcopolymeren.

Die Alkylethoxylat-Kondensationsprodukte aliphatischer Alkohole mit 1 bis 150 Mol Ethylenoxid sind zum diesbezüglichen Gebrauch besonders geeignet. Die Alkylkette des aliphatischen Alkohols kann entweder gerade oder verzweigt, primär oder sekundär sein und enthält in der Regel zwischen 6 und 22 Kohlenstoffatome. Besonders bevorzugt sind die Kondensationsprodukte von Alkoholen mit einer Alkylgruppe, die 8 bis 20 Kohlenstoffatome enthält, mit 25 bis 150 Mol Ethylenoxid pro Mol Alkohol, vorzugsweise 50 bis 125, mehr bevorzugt 60 bis 100 Mol Ethylenoxid pro Mol Alkohol.

Besonders bevorzugte nichtionische ethoxylierte Emulgatoren sind aus ethoxyliertem Alkohol und werden ausgewählt aus Talg (C₁₆-C₁₈)alkohol, ethoxyliert mit mindestens 25 vorzugsweise mit mindestens 50 Mol Ethylenoxid, im Handel erhältlich unter dem Markennamen Lutensol von BASF, Empilan von Albright and Wilson und Genapol von Clariant. Ein besonders bevorzugter Emulgator aus ethoxyliertem Alkohol ist Talg(C₁₆-C₁₈)alkohol, ethoxyliert mit 80 Mol Ethylenoxid und im Handel erhältlich unter dem Markennamen Lutensol 80/80 von BASF, Empilan KM 80 von Albright and Wilson oder Genapol T800 von Clariant.

Besonders bevorzugte nichtionische ethoxylierte Emulgatoren aus der Gruppe der Ethyleneoxid/ Propylenoxidblockcopolymere sind ethoxyliert mit mindestens 25 Mol Ethylenoxid, bevorzugt mit mindestens 50 und ganz bevorzugt mit mindestens 75 Mol Ethylenoxid. Vorzugsweise sind diese Ethyleneoxid/Propylenoxidblockcopolymere propoxyliert mit mindestens 20 Mol Propylenoxid, im Handel beispielweise erhältlich unter dem Markennamen Pluronic von BASF und Synperonic von Croda. Aus dieser Produktgruppe werden bevorzugt Pluronic PE 10500 von BASF und Synperonic PE/F127 von Croda eingesetzt.

Erfindungsgemäß umfasst die O/W-Formulierung vorzugsweise 0,1 bis 10 Gew.-%, noch bevorzugter 0,5 bis 8 Gew.-% eines nichtionischen ethoxylierten Emulgators als Bestandteil des erfindungsgemäßen O/W-Formulierung stärker bevorzugt im Ausmaß von 1,0 bis 6 Gew.-%.

Erfindungsgemäß wird vorzugsweise neben dem Polyvinylalkohol auch zumindest ein geeigneter nichtionischer ethoxylierter Emulgator für die O/W-Formulierung eingesetzt.

Nichtwässrige Lösungsmittel, die für die vorliegende Erfindung verwendbar sind, sind weitreichend und haben eine geringe Löslichkeit in Wasser. Besonders geeignete nichtwässrige Lösungsmittel zur Verwendung in der vorliegenden O/W-Formulierung beinhalten aromatische Kohlenwasserstoffe, wie beispielsweise Alkylbenzole oder Alkylnapthaline (beispielsweise SOLVESSO 100, SOLVESSO 150 und SOLVESSO 200, SOLVESSO ist eine eingetragene Marke; Xylole; Reutasolv DI, Reutasolv MP, Reutasolv BP 4201, Reutasolv ist eine eingetragene Marke); aliphatische Lösungsmittel (z.B. Kerosin, Exxsol D60 und D80 von ExxonMobil), Ketone (z.B. Cyclohexanon oder Methlycyclohexanon); Alkohole (z.B. Benzylalkohol, Furfurylalkohol oder Butanol); N-Alkylpyrrolidone (z.B. N-Methylpyrrolidon oder N-Octylpyrrolidon); Dimethylamide von Fettsäuren (z.B. C₈-C₁₀-Fettsäuredimethylamid); pflanzliche und tierische Öle und chlorierte Kohlenwasserstoffe (z.B. Chlorbenzole).

Der Begriff pflanzliche Öle, wie er hier verwendet wird, schließt Öle aus allen ölproduzierenden Pflanzen ein, wie Rapsöl, Sojaöl, Palmöl, Sonnenblumenöl, Baumwollöl, Maisöl, Leinöl, Kokosnußöl, Distelöl oder Rizinusöl. Der Ausdruck tierisches Öl, wie er hier verwendet wird, schließt Öle aus ölproduzierenden Tieren ein, wie Talgöl. Weitere Beispiele nichtwässriger Lösungsmittel sind die Umesterungsprodukte dieser Öle, wie Alkylester, beispielsweise Rapsölmethylester, wie Radia 7961 (Fina Chemicals, Belgien), oder Rapsölethylester. Pflanzenöle sind vorzugsweise Ester von C₁₀-C₂₂-, vorzugsweise C₁₂-C₂₂-Fettsäuren. Derartige C₁₀-C₂₂-Fettsäureester sind beispielsweise Ester von ungesättigten oder gesättigten C₁₀-C₂₂-Fettsäuren, insbesondere mit einer geraden Anzahl von Kohlenstoffatomen, wie beispielsweise cis-Erucasäure, Isoerucasäure, Laurinsäure, Palmitinsäure, Myristinsäure, insbesondere C₁₈-Fettsäuren, wie Stearinsäure, Linolsäure oder Linolensäure. Beispiele für C₁₀-C₂₂-Fettsäureester sind solche Ester, die durch Umsetzen von Glycerin oder Glykol mit C₁₀-C₂₂-Fettsäuren erhältlich sind und die beispielsweise in Ölen aus ölproduzierenden Pflanzen enthalten sind, sowie (C₁-C₂₀)Alkyl(C₁₀-C₂₂)-Fettsäureester, die beispielsweise durch Umesterung dieser Glycerin- oder Glykol-C₁₀-C₂₂-Fettsäureester mit C₁-C₂₀-Alkoholen (wie Methanol, Ethanol, Propanol oder Butanol) erhalten werden können. Die Umesterung kann nach in der Technik allgemein bekannten Verfahren vorgenommen werden, die beispielsweise in Römpps Chemie Lexikon, 9. Aufl., Bd. 2, Seite 1343, Thieme Verlag, Stuttgart, beschrieben sind. Bevorzugt als C₁-C₂₀-Alkyl-C₁-C₂₂-Fettsäureester werden die Methylester, Ethylester, n-Propylester, Isopropylester, n-Butylester, Isobutylester, n-Pentylester, Isopentylester, Neopentylester, n-Hexylester, Isohexylester, n-Heptylester, Isoheptylester, n-Octylester, 2-Ethylhexylester, n-Nonylester, Isononylester und Dodecylester. Als Glycerin- und Glykol-C₁₀-C₂₂-Fettsäureester werden die einheitlichen oder gemischten Glycerin- oder Glykolester von C₁₀-C₂₂-Fettsäuren bevorzugt, insbesondere von Fettsäuren mit einer geraden Anzahl von Kohlenstoffatomen, wie cis-Erucasäure, Isoerucasäure, Laurinsäure, Palmitinsäure, Myristinsäure, insbesondere einer C₁₈-Fettsäure, wie Stearinsäure, Linolsäure oder Linolensäure.

Erfindungsgemäß besonders bevorzugte nichtwässrige Lösungsmittel sind Dimethylamide von Fettsäuren (wie beispielsweise Genagen), pflanzliche Öle (wie beispielsweise Rapsölmethylester) und Alkylnapthaline (wie beispielsweise SOLVESSO).

In einer bevorzugten Ausführungsform ist der Wirkstoff löslich in dem ausgewählten Lösungsmittel. Es kann vorteilhaft sein, insbesondere dann, wenn die aktive Substanz in den oben genannten Lösungsmittel nicht sehr gut löslich ist, ein oder mehrere Co-Lösungsmittel einzubeziehen.

Erfindungsgemäß umfasst die O/W-Formulierung vorzugsweise 1 bis 60 Gew.-%, vorzugsweise 5 bis 40 Gew.-% zumindest eines nichtwässrigen Lösungsmittels als Bestandteil der erfindungsgemäßen O/W-Formulierung.

Ein weiterer Bestandteil der erfindungsgemäßen Formulierung ist mindestens ein Brandsalz. Durch Brandsalze können Trägermaterialien, die mit der erfindungsgemäßen Formulierung behandelt werden, nach dem Anzünden und dem anschließenden Löschen der Flamme, kontrolliert und gleichmäßig verglimmen. Somit kann das Brandsalz die Brennbarkeit des behandelten Trägermaterials in Bezug auf Geschwindigkeit und Vollständigkeit der Verbrennung gewährleisten, ohne ein spontanes Entflammen zu ermöglichen.

Ein Brandsalz ist vorzugsweise ausgewählt aus der Gruppe von Nitratsalzen (z.B. Kaliumnitrat, Chromnitrat, Eisennitrat, Kupfernitrat, Natriumnitrat). Bevorzugt wird als Brandsalz Kaliumnitrat eingesetzt.

Erfindungsgemäß umfasst die O/W-Formulierung vorzugsweise 6 bis 25 Gew.-%, vorzugsweise 8 bis 15 Gew.-% mindestens eines Brandsalzes als Bestandteil der erfindungsgemäßen O/W-Formulierung.

In der erfindungsgemäßen O/W-Formulierung wird mindestens ein insektizider Wirkstoff ausgewählt aus der Gruppe der Pyrethroide eingesetzt. Darüber hinaus können auch zwei oder mehrere insektizide Wirkstoffe gleichzeitig auf dem Trägermaterial, insbesondere dem Papierträgermaterial, vorgesehen sein, wie beispielsweise 2, 3, 4 oder mehr insektizide Wirkstoffe.

Pyrethroide im Sinne der Erfindung sind insbesondere ausgewählt aus der Gruppe bestehend aus Acrinathrin, Allethrin, d-Allethrin, d-trans Allethrin, d-cis-trans Allethrin, Alphamethrin, Bathrin, Bifenthrin, Bioallethrin, S-Bioallethrin, Bioallethrin-S-cyclopentenyl-isomer, Bioethanomethrin, Biopermethrin, Bioresmethrin, Clocythrin, Chlovaporthrin, Cycloprothrin, Cyfluthrin, beta-Cyfluthrin, Cyhalothrin, gamma-Cyhalothrin, lambda-Cyhalothrin, Cypermethrin, alpha-Cypermethrin, beta-Cypermethrin, cis-Cypermethrin, theta-Cypermethrin, zeta-Cypermethrin, Cyphenotrin, Deltamethrin, Depallethrin, Empenthrin, Empenthrin (1R-isomer), Esbiothrin, Esfenvalerat, Etophenprox, Fenfluthrin, Fenpropathrin, Fenpyrithrin, Fenvalerat, Flubrocythrinate, Flucythrinat, tau-Fluvalinate, Flumethrin, Fubfenprox, Halfenprox, Imiprothrin, Kadethrin, Metofluthrin, Neopynamin, Permethrin, cis-Permethrin, trans-Permethrin, Phenothrin, Phenothrin (1R-trans Isomer), d-Phenothrin, Prallethrin, Profluthrin, Protrifenbute, Pynamin forte, Pyresmethrin, Pyrethrin, Resmethrin, cis-Resmethrin, RU 15525, Silafluofen, Tau-Fluvalinat, Tefluthrin, Tetramethrin (Phthalthrin), Tetramethrin (-1R- Isomer), Terallethrin, Tralomethrin, Transfluthrin, ZXI 8901, Pyrethrins (pyrethrum) und jedwede Mischung der zuvor genannten Wirkstoffe.

Besonders bevorzugt wird als Pyrethroid Esbiothrin, lambda-Cyhalothrin, d-Allethrin, S-Bioallethrin, Prallethrin, Metofluthrin, Pyrethrum und/oder Transfluthrin verwendet. Ganz besonders bevorzugt ist Transfluthrin.

Erfindungsgemäß umfasst die O/W-Formulierung vorzugsweise 0,1 bis 20 Gew.-%, vorzugsweise 1 bis 10 Gew.-% zumindest eines Insektizides als Bestandteil des erfindungsgemäßen O/W-Formulierung.

Als weitere insektizide Wirkstoff können für die erfindungsgemäße Formulierung beispielsweise folgende Verbindungen verwendet werden:
(1) Acetylcholinesterase (AChE) Inhibitoren, wie beispielsweise Carbamate, z.B. Alanycarb (II-1-1), Aldicarb (II-1-2), Bendiocarb (II-1-3), Benfuracarb (II-1-4), Butocarboxim (II-1-5), Butoxycarboxim (II-1-6), Carbaryl (II-1-7), Carbofuran (II-1-8), Carbosulfan (II-1-9), Ethiofencarb (II-1-10), Fenobucarb (II-1-11), Formetanate (II-1-12), Furathiocarb (II-1-13), Isoprocarb (II-1-14), Methiocarb (II-1-15), Methomyl (II-1-16), Metolcarb (II-1-17), Oxamyl (II-1-18), Pirimicarb (II-1-19), Propoxur (II-1-20), Thiodicarb (II-1-21), Thiofanox (II-1-22), Triazamate (II-1-23), Trimethacarb (II-1-24), XMC (II-1-25) und Xylylcarb (II-1-26); oder Organophosphate, z.B. Acephate (II-1-27), Azamethiphos (II-1-28), Azinphos-ethyl (II-1 - 29), Azinphos-methyl (II-1-30), Cadusafos (II-1-31), Chlorethoxyfos (II-1-32), Chlorfenvinphos (II-1-33), Chlormephos (II-1-34), Chlorpyrifos (II-1-35), Chlorpyrifos-methyl (II-1-36), Coumaphos (II-1-37), Cyanophos (II-1-38), Demeton-S-methyl (II-1-39), Diazinon (II-1-40), Dichlorvos/DDVP (II-1-41), Dicrotophos (II-1-42), Dimethoate (II-1-43), Dimethylvinphos (II-1-44), Disulfoton (II-1-45), EPN (II-1-46), Ethion (II-1-47), Ethoprophos (II-1-48), Famphur (II-1-49), Fenamiphos (II-1-50), Fenitrothion (II-1 - 51), Fenthion (II-1-52), Fosthiazate (II-1-53), Heptenophos (II-1-54), Imicyafos (II-1-55), Isofenphos (II-1-56), Isopropyl O-(methoxyaminothio-phosphoryl) salicylat (II-1-57), Isoxathion (II-1-58), Malathion (II-1-59), Mecarbam (II-1-60), Methamidophos (II-1-61), Methidathion (II-1-62), Mevinphos (II-1-63), Monocrotophos (II-1-64), Naled (II-1-65), Omethoate (II-1-66), Oxydemeton-methyl (II-1-67), Parathion (II-1-68), Parathion-methyl (II-1-69), Phenthoate (II-1-70), Phorate (II-1-71), Phosalone (II-1-72), Phosmet (II-1-73), Phosphamidon (II-1-74), Phoxim (II-1-75), Pirimiphos-methyl (II-1-76), Profenofos (II-1-77), Propetamphos (II-1-78), Prothiofos (II-1-79), Pyraclofos (II-1-80), Pyridaphenthion (II-1-81), Quinalphos (II-1-82), Sulfotep (II-1-83), Tebupirimfos (II-1-84), Temephos (II-1-85), Terbufos (II-1-86), Tetrachlorvinphos (II-1-87), Thiometon (II-1-88), Triazophos (II-1-89), Trichlorfon (II-1-90) und Vamidothion (II-1-91).
(2) GABA-gesteuerte Chlorid-Kanal-Antagonisten, wie beispielsweise Cyclodien-organochlorine, z.B. Chlordane (II-2-1) und Endosulfan (II-2-2); oder Phenylpyrazole (Fiprole), z.B. Ethiprole (II-2-3) und Fipronil (II-2-4).
(3) Natrium-Kanal-Modulatoren / Spannungsabhängige Natrium-Kanal-Blocker, wie beispielsweise
   Pyrethroide, z.B. Acrinathrin (II-3-1), Allethrin (II-3-2), d-cis-trans Allethrin (II-3-3), d-trans Allethrin (II-3-4), Bifenthrin (II-3-5), Bioallethrin (II-3-6), Bioallethrin S-cyclopentenyl Isomer (II-3-7), Bioresmethrin (II-3-8), Cycloprothrin (II-3-9), Cyfluthrin (II-3-10), beta-Cyfluthrin (II-3-11), Cyhalothrin (II-3-12), lambda-Cyhalothrin (II-3-13), gamma-Cyhalothrin (II-3-14), Cypermethrin (II-3-15), alpha-Cypermethrin (II-3-16), beta-Cypermethrin (II-3-17), theta-Cypermethrin (II-3-18), zeta-Cypermethrin (II-3-19), Cyphenothrin [(1R)-trans-Isomere] (II-3-20), Deltamethrin (II-3-21), Empenthrin [(EZ)-(1R)-Isomere) (II-3-22), Esfenvalerate (II-3-23), Etofenprox (II-3-24), Fenpropathrin (II-3-25), Fenvalerate (II-3-26), Flucythrinate (II-3-27), Flumethrin (II-3-28), tau-Fluvalinate (II-3-29), Halfenprox (II-3-30), Imiprothrin (II-3-31), Kadethrin (lI-3-32), Permethrin (II-3-33), Phenothrin [(1R)-trans-Isomer) (II-3-34), Prallethrin (II-3-35), Pyrethrine (pyrethrum) (II-3-36), Resmethrin (II-3-37), Silafluofen (II-3-38), Tefluthrin (II-3-39), Tetramethrin (II-3-40), Tetramethrin [(1R)- Isomere)] (II-3-41), Tralomethrin (II-3-42) und Transfluthrin (II-3-43); oder DDT (II-3-44); oder Methoxychlor (II-3-45).
(4) Nikotinerge Acetylcholin-Rezeptor (nAChR) Agonisten, wie beispielsweise Neonikotinoide, z.B. Acetamiprid (II-4-1), Clothianidin (II-4-2), Dinotefuran (II-4-3), Imidacloprid (II-4-4), Nitenpyram (II-4-5), Thiacloprid (II-4-6) und Thiamethoxam (II-4-7); oder Nikotin (II-4-8).
(5) Nikotinerge Acetylcholin-Rezeptor (nAChR) allosterische Aktivatoren, wie beispielsweise Spinosine, z.B. Spinetoram (II-5-1) und Spinosad (II-5-2).
(6) Chlorid-Kanal-Aktivatoren, wie beispielsweise Avermectine/Milbemycine, z.B. Abamectin (II-6-1), Emamectin-benzoat (II-6-2), Lepimectin (II-6-3) und Milbemectin (II-6-4).
(7) Juvenilhormon-Imitatoren, wie beispielsweise Juvenilhormon-Analoge, z.B. Hydroprene (II-7-1), Kinoprene (II-7-2) und Methoprene (II-7-3); oder Fenoxycarb (II-7-4); oder Pyriproxyfen (II-7-5).
(8) Wirkstoffe mit unbekannten oder nicht spezifischen Wirkmechanismen, wie beispielsweise Alkylhalide, z.B. Methylbromid (II-8-1) und andere Alkylhalide; oder Chloropicrin (II-8-2); oder Sulfurylfluorid (II-8-3); oder Borax (II-8-4); oder Brechweinstein (II-8-5).
(9) Selektive Fraßhemmer, z.B. Pymetrozine (II-9-1); oder Flonicamid (II-9-2).
(10) Milbenwachstumsinhibitoren, z.B. Clofentezine (II-10-1), Hexythiazox (II-10-2) und Diflovidazin (II-10-3); oder Etoxazole (II-10-4).
(11) Mikrobielle Disruptoren der Insektendarmmembran, z.B. Bacillus thuringiensis Subspezies israelensis (II-11-1), Bacillus sphaericus (II-11-2), Bacillus thuringiensis Subspezies aizawai (II-11-3), Bacillus thuringiensis Subspezies kurstaki (II-11-4), Bacillus thuringiensis Subspezies tenebrionis (II-11-5) und BT Pflanzenproteine: Cry1Ab, Cry1Ac, Cry1Fa, Cry2Ab, mCry3A, Cry3Ab, Cry3Bb, Cry34/35Ab1 (II-11-6).
(12) Inhibitoren der oxidativen Phosphorylierung, ATP-Disruptoren, wie beispielsweise Diafenthiuron (II-12-1); oder Organozinnverbindungen, z.B. Azocyclotin (II-12-2), Cyhexatin (II-12-3) und Fenbutatin-oxid (II-12-4); oder Propargite (II-12-5); oder Tetradifon (II-12-6).
(13) Entkoppler der oxidativen Phoshorylierung durch Unterbrechung des H-Protongradienten, wie beispielsweise Chlorfenapyr (II-13-1), DNOC (II-13-2) und Sulfluramid (II-13-3).
(14) Nikotinerge Acetylcholin-Rezeptor-Antagonisten, wie beispielsweise Bensultap (II-14-1), Cartaphydrochlorid (II-14-2), Thiocyclam (II-14-3) und Thiosultap-Natrium (II-14-4).
(15) Inhibitoren der Chitinbiosynthese, Typ 0, wie beispielsweise Bistrifluron (II-15-1), Chlorfluazuron (II-15-2), Diflubenzuron (II-15-3), Flucycloxuron (II-15-4), Flufenoxuron (II-15-5), Hexaflumuron (II-15-6), Lufenuron (II-15-7), Novaluron (II-15-8), Noviflumuron (II-15-9), Teflubenzuron (II-15-10) und Triflumuron (II-15-11).
(16) Inhibitoren der Chitinbiosynthese, Typ 1, wie beispielsweise Buprofezin (II-16-1).
(17) Häutungsstörende Wirkstoffe, Dipteran, wie beispielsweise Cyromazine (II-17-1).
(18) Ecdyson-Rezeptor Agonisten, wie beispielsweise Chromafenozide (II-18-1), Halofenozide (II-18-2), Methoxyfenozide (II-18-3) und Tebufenozide (II-18-4).
(19) Oktopaminerge Agonisten, wie beispielsweise Amitraz (II-19-1).
(20) Komplex-III-Elektronentransportinhibitoren, wie beispielsweise Hydramethylnon (II-20-1); oder Acequinocyl (II-20-2); oder Fluacrypyrim (II-20-3).
(21) Komplex-I-Elektronentransportinhibitoren, beispielsweise METI-Akarizide, z.B. Fenazaquin (II-21-1), Fenpyroximate (II-21-2), Pyrimidifen (II-21-3), Pyridaben (II-21-4), Tebufenpyrad (II-21-5) und Tolfenpyrad (II-21-6); oder Rotenone (Derris) (II-21-7).
(22) Spannungsabhängige Natriumkanal-Blocker, z.B. Indoxacarb (II-22-1); oder Metaflumizone (II-22-2).
(23) Inhibitoren der Acetyl-CoA-Carboxylase, wie beispielsweise Tetron- und Tetramsäurederivate, z.B. Spirodiclofen (II-23-1), Spiromesifen (II-23-2) und Spirotetramat (II-23-3).
(24) Komplex-IV-Elektronentransportinhibitoren, wie beispielsweise Phosphine, z.B. Aluminiumphosphid (II-24-1), Calciumphosphid (II-24-2), Phosphin (II-24-3) und Zinkphosphid (II-24-4); oder Cyanid (II-24-5).
(25) Komplex-II-Elektronentransportinhibitoren, wie beispielsweise Cyenopyrafen (II-25-1).
(28) Ryanodinrezeptor-Effektoren, wie beispielsweise Diamide, z.B. Chlorantraniliprole (II-28-1) und Flubendiamide (II-28-2).

Weitere Wirkstoffe mit unbekanntem Wirkmechanismus, wie beispielsweise Amidoflumet (II-29-1), Azadirachtin (II-29-2), Benclothiaz (II-29-3), Benzoximate (II-29-4), Bifenazate (II-29-5), Bromopropylate (II-29-6), Chinomethionat (II-29-7), Cryolite (II-29-8), Cyantraniliprole (Cyazypyr) (II-29-9), Cyflumetofen (II-29-10), Dicofol (II-29-11), Diflovidazin (II-29-12), Fluensulfone (II-29-13), Flufenerim (II-29-14), Flufiprole (II-29-15), Fluopyram (II-29-16), Fufenozide (II-29-17), Imidaclothiz (II-29-18), Iprodione (II-29-19), Meperfluthrin (II-29-20), Pyridalyl (II-29-21), Pyrifluquinazon (II-29-22), Tetramethylfluthrin (II-29-23) und Iodmethan (II-29-24); desweiteren Präparate auf Basis von Bacillus firmus (insbesondere Stamm CNCM I-1582, beispielsweise VOTiVO™, BioNem) (II-29-25) sowie folgende bekannte wirksame Verbindungen: 3-Brom-N-{2-brom-4-chlor-6-[(1-cyclopropylethyl)carbamoyl]phenyl}-1-(3-chlorpyridin-2-yl)-1H-pyrazol-5-carboxamid (II-29-26) (bekannt aus WO2005/077934), 4-{[(6-Brompyrid-3-yl)methyl](2-fluorethyl)amino}furan-2(5H)-on (II-29-27) (bekannt aus WO2007/115644), 4-{[(6-Fluorpyrid-3-yl)methyl](2,2-difluorethyl)amino}furan-2(5H)-on (II-29-28) (bekannt aus WO2007/115644), 4-{[(2-Chlor-1,3-thiazol-5-yl)methyl](2-fluorethyl)amino}furan-2(5H)-on (II-29-29) (bekannt aus WO2007/115644), 4-{[(6-Chlorpyrid-3-yl)methyl](2-fluorethyl)amino}furan-2(5H)-on (II-29-30) (bekannt aus WO2007/115644), Flupyradifurone (II-29-31), 4-{[(6-Chlor-5-fluorpyrid-3-yl)methyl](methyl)amino}furan-2(5H)-on (II-29-32) (bekannt aus WO2007/115643), 4-{ [(5,6-Dichlorpyrid-3-yl)methyl](2-fluorethyl)amino}furan-2(5H)-on (II-29-33) (bekannt aus WO2007/115646), 4-{[(6-Chlor-5-fluorpyrid-3-yl)methyl](cyclopropyl)amino}furan-2(5H)-on (II-29-34) (bekannt aus WO2007/115643), 4-{[(6-Chlorpyrid-3-yl)methyl](cyclopropyl)amino}furan-2(5H)-on (II-29-35) (bekannt aus EP-A-0 539 588), 4-{[(6-Chlorpyrid-3-yl)methyl](methyl)amino}furan-2(5H)-on (II-29-36) (bekannt aus EP-A-0 539 588), {[1-(6-Chlorpyridin-3-yl)ethyl](methyl)oxido-λ⁴-sulfanyliden}cyanamid (II-29-37) (bekannt aus WO2007/149134) und seine Diastereomere {[(1R)-1-(6-Chlorpyridin-3-yl)ethyl](methyl)oxido-λ⁴-sulfanyliden}cyanamid (A) (II-29-38) und {[(1S)-1-(6-Chlorpyridin-3-yl)ethyl](methyl)oxido-λ⁴-sulfanyliden} cyanamid (B) (II-29-39) (ebenfalls bekannt aus WO2007/149134) sowie Sulfoxaflor (II-29-40) und seine Diastereomere [(R)-Methyl(oxido){(1R)-1-[6-(trifluormethyl)pyridin-3-yl]ethyl}-λ⁴-sulfanyliden]cyanamid (A1) (II-29-41) und [(S)-Methyl(oxido) {(1S)-1-[6-(trifluormethyl)pyridin-3-yl]ethyl}-λ⁴-sulfanyliden]cyanamid (A2) (II-29-42), bezeichnet als Diastereomerengruppe A (bekannt aus WO 2010/074747, WO 2010/074751), [(R)-Methyl(oxido){(1S)-1-[6-(trifluormethyl)pyridin-3-yl]ethyl}-λ⁴-sulfanyliden]cyanamid (B1) (II-29-43) und [(S)-Methyl(oxido){(1R)-1-[6-(trifluormethyl)pyridin-3-yl]ethyl}-λ⁴-sulfanyliden]cyanamid (B2) (II-29-44), bezeichnet als Diastereomerengruppe B (ebenfalls bekannt aus WO 2010/074747, WO 2010/074751) und 11-(4-Chlor-2,6-dimethylphenyl)-12-hydroxy-1,4-dioxa-9-azadispiro[4.2.4.2]tetradec-11-en-10-on (II-29-45) (bekannt aus WO2006/089633), 3-(4'-Fluor-2,4-dimethylbiphenyl-3-yl)-4-hydroxy-8-oxa-1-azaspiro[4.5]dec-3-en-2-on (II-29-46) (bekannt aus WO2008/067911), 1-{2-Fluor-4-methyl-5-[(2,2,2-trifluorethyl)sulfinyl]phenyl}-3-(trifluormethyl)-1H-1,2,4-triazol-5-amin (II-29-47) (bekannt aus WO2006/043635), [(3S,4aR,12R,12aS,12bS)-3-[(Cyclopropylcarbonyl)oxy]-6,12-dihydroxy-4,12b-dimethyl-11-oxo-9-(pyridin-3-yl)-1,3,4,4a,5,6,6a,12,12a,12b-decahydro-2H,11H-benzo[f]pyrano[4,3-b]chromen-4-yl]methylcyclopropancarboxylat (II-29-48) (bekannt aus WO2008/066153), 2-Cyan-3-(difluormethoxy)-N,N-dimethylbenzolsulfonamid (II-29-49) (bekannt ausWO2006/056433), 2-Cyan-3-(difluormethoxy)-N-methylbenzolsulfonamid (II-29-50) (bekannt aus WO2006/100288), 2-Cyan-3-(difluormethoxy)-N-ethylbenzolsulfonamid (II-29-51) (bekannt aus WO2005/035486), 4-(Difluormethoxy)-N-ethyl-N-methyl-1,2-benzothiazol-3-amin-1,1-dioxid (II-29-52) (bekannt aus WO2007/057407), N-[1-(2,3-Dimethylphenyl)-2-(3,5-dimethylphenyl)ethyl]-4,5-dihydro-1,3-thiazol-2-amin (II-29-53) (bekannt aus WO2008/104503), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (II-29-54) (bekannt aus WO2003/106457), 3-(2,5-Dimethylphenyl)-4-hydroxy-8-methoxy-1,8-diazaspiro[4.5]dec-3-en-2-on (II-29-55) (bekannt aus WO2009/049851), 3-(2,5-Dimethylphenyl)-8-methoxy-2-oxo-1,8-diazaspiro[4.5]dec-3-en-4-yl-ethylcarbonat (II-29-56) (bekannt aus WO2009/049851), 4-(But-2-in-1-yloxy)-6-(3,5-dimethylpiperidin-1-yl)-5-fluorpyrimidin (II-29-57) (bekannt aus WO2004/099160), (2,2,3,3,4,4,5,5-Octafluorpentyl)(3,3,3-trifluorpropyl)malononitril (II-29-58) (bekannt aus WO2005/063094), (2,2,3,3,4,4,5,5-Octafluorpentyl)(3,3,4,4,4-pentafluorbutyl)malononitril (II-29-59) (bekannt aus WO2005/063094), 8-[2-(Cyclopropylmethoxy)-4-(trifluormethyl)phenoxy]-3-[6-(trifluormethyl)pyridazin-3-yl]-3-azabicyclo[3.2.1]octan (II-29-60) (bekannt aus WO2007/040280), Flometoquin (II-29-61), PF1364 (CAS-Reg.Nr. 1204776-60-2) (II-29-62) (bekannt aus JP2010/018586), 5-[5-(3,5-Dichlorphenyl)-5-(trifluormethyl)-4,5-dihydro-1,2-oxazol-3-yl]-2-(1H-1,2,4-triazol-1-yl)benzonitril (II-29-63) (bekannt aus WO2007/075459), 5-[5-(2-Chlorpyridin-4-yl)-5-(trifluormethyl)-4,5-dihydro-1,2-oxazol-3-yl]-2-(1H-1,2,4-triazol-1-yl)benzonitril (II-29-64) (bekannt aus WO2007/075459), 4-[5-(3,5-Dichlorphenyl)-5-(trifluormethyl)-4,5-dihydro-1,2-oxazol-3-yl]-2-methyl-N-{2-oxo-2-[(2,2,2-trifluorethyl)amino]ethyl}benzamid (II-29-65) (bekannt aus WO2005/085216), 4-{[(6-Chlorpyridin-3-yl)methyl](cyclopropyl)amino}-1,3-oxazol-2(5H)-on (II-29-66), 4-{[(6-Chlorpyridin-3-yl)methyl](2,2-difluorethyl)amino}-1,3-oxazol-2(5H)-on (II-29-67), 4-{[(6-Chlorpyridin-3-yl)methyl](ethyl)amino}-1,3-oxazol-2(5H)-on (II-29-68), 4-{[(6-Chlorpyridin-3-yl)methyl](methyl)amino}-1,3-oxazol-2(5H)-on (II-29-69) (alle bekannt aus WO2010/005692), NNI-0711 (II-29-70) (bekannt aus WO2002/096882), 1-Acetyl-N-[4-(1,1,1,3,3,3-hexafluor-2-methoxypropan-2-yl)-3-isobutylphenyl]-N-isobutyryl-3,5-dimethyl-1H-pyrazol-4-carboxamid (II-29-71) (bekannt aus WO2002/096882), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (II-29-72) (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (II-29-73) (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-methylhydrazincarboxylat (II-29-74) (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-1,2-diethylhydrazincarboxylat (II-29-75) (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (II-29-76) (bekannt aus WO2005/085216), (5RS,7RS;5RS,7SR)-1-(6-Chlor-3-pyridylmethyl)-1,2,3,5,6,7-hexahydro-7-methyl-8-nitro-5-propoxyimidazo[1,2-a]pyridin (II-29-77) (bekannt aus WO2007/101369), 2-{6-[2-(5-Fluorpyridin-3-yl)-1,3-thiazol-5-yl]pyridin-2-yl}pyrimidin (II-29-78) (bekannt aus WO2010/006713), 2-{6-[2-(Pyridin-3-yl)-1,3-thiazol-5-yl]pyridin-2-yl}pyrimidin (II-29-79) (bekannt aus WO2010/006713), 1-(3-Chlorpyridin-2-yl)-N-[4-cyan-2-methyl-6-(methylcarbamoyl)phenyl]-3-{[5-(trifluormethyl)-1H-tetrazol-1-yl]methyl}-1H-pyrazol-5-carboxamid (II-29-80) (bekannt aus WO2010/069502), 1-(3-Chlorpyridin-2-yl)-N-[4-cyan-2-methyl-6-(methylcarbamoyl)phenyl]-3-{[5-(trifluormethyl)-2H-tetrazol-2-yl]methyl}-1H-pyrazol-5-carboxamid (II-29-81) (bekannt aus WO2010/069502), N-[2-(tert-Butylcarbamoyl)-4-cyan-6-methylphenyl]-1-(3-chlorpyridin-2-yl)-3-1[5-(trifluormethyl)-1H-tetrazol-1-yl]methyl}-1H-pyrazol-5-carboxamid (II-29-82) (bekannt aus WO2010/069502), N-[2-(tert-Butylcarbamoyl)-4-cyan-6-methylphenyl]-1-(3-chlorpyridin-2-yl)-3-{[5-(trifluormethyl)-2H-tetrazol-2-yl]methyl}-1H-pyrazol-5-carboxamid (II-29-83) (bekannt aus WO2010/069502), (lE)-N-[(6-Chlorpyridin-3-yl)methyl]-N'-cyan-N-(2,2-difluorethyl)ethanimidamid (II-29-84) (bekannt aus WO2008/009360), N-[2-(5-Amino-1,3,4-thiadiazol-2-yl)-4-chlor-6-methylphenyl]-3-brom-1-(3-chlorpyridin-2-yl)-1H-pyrazol-5-carboxamid (II-29-85) (bekannt aus CN102057925) und Methyl-2-[3,5-dibrom-2-({[3-brom-1-(3-chlorpyridin-2-yl)-1H-pyrazol-5-yl]carbonyl}amino)benzoyl]-2-ethyl-l-methylhydrazincarboxylat (II-29-86) (bekannt aus WO2011/049233).

Die hier mit ihrem "common name" genannten Wirkstoffe sind bekannt und beispielsweise im Pestizidhandbuch ("The Pesticide Manual" 14th Ed., British Crop Protection Council 2006) beschrieben oder im Internet recherchierbar (z.B. http://www.alanwood.net/pesticides).

Als weiterer Bestandteil enthält die vorliegende O/W-Formulierung Wasser. Die erfindungsgemäße O/W-Formulierung umfaßt vorzugsweise 20 bis 85 Gew.-%, stärker bevorzugt 40 bis 70 Gew.-% Wasser.

In einer bevorzugten Ausführungsform der vorliegenden Erfindung enthält die erfindungsgemäße O/W-Formulierung vorzugsweise des Weiteren mindestens einen Farbstoff und/oder mindestens einen Duftstoff. Vorzugweise umfasst die erfindungsgemäße Formulierung zumindest einen Farbstoff und zumindest einen Duftstoff.

Als Farbstoff können anorganische Pigmente, z.B. Eisenoxid, Titanoxid, Ferrocyanblau und organische Farbstoffe, wie Triphenylmethane, Diphenylmethane, Oxazine, Xanthene, Imininonaphthochinone, Azomethine und Anthrachinone, wie beispielsweise Oil Yellow #101, Oil Yellow #103, Oil Pink #312, Oil Red, Oil Green BG, Oil Blue BOS, Oil Blue #603, Oil Black BY, Oil Black BS, Oil Black T-505 (Orient Kagaku Kogyo), Victoria Purc Blue BOH (Hodogaya Kagaku), Patent Pure Blue (Sumitomo Mikuni Kagaku), Cyrstal Violet (CI 4255) Methyl Violet (CI 42535), Ethyl Violet, Rhodamin B (CI 145170B), Malchit Green (CI 142000) Methylen Blue (CI 52015), Brilliant Blue, Methyl Green, Erythrocin B, Basic Fuchsine, m-Kresol Purple, Auramin, 4-p- Diethylaminophenyliminaphthochinon, Leucobasis-Farbstoffe und primäre oder sekundäre Acrylaminfarbstoffe, wie beispielsweise Triphenylamin, Diphenylamin, o-Chloroanilin, 1,23,-Triphenylganidin, Naphthylamin, Diaminodiphenylmethan, p,p-Bis-dimethylaminodiphenylamin, 1,2-Dianilinoethylen, p,p',p"-tris-Dimethylaminotriphenylmethan, p,p'-Bis-dimethylaminodiphenylmethylimin, p,p,p"-Triamino-o-methyltriphenylmethan, p,p'-Bis-dimethylaminodiphenyl-4-anilinonaphthylmethan, p,p',p"-Triaminotriphenylmethan, usw., eingesetzt werden.

Bevorzugt werden anionische, kationische oder basische Farbstoffe wie beispielhaft Xanthenfarbstoffe Ceravon Fast Rhodamine B 400% (DixonChew) und Sanolin Rhodamin B02 (Clariant), der Direktfarbstoff Levacell Violett BB fl. 40% (Lanxess), der Azofarbstoff Bayscript Magenta LB fl. (Lanxess), Ceracryl Magenta (DixonChew), Astra Red Violett 3RC liq. (Lanxess), Astra Phloxin G (Lanxess) und Cartazine Violet 4EK liq. (Clariant), eingesetzt.

Besonders bevorzugt werden anionische Farbstoffe wie beispielhaft die Xanthenfarbstoffe Ceravon Fast Rhodamine B 400% (DixonChew) und Sanolin Rhodamin B02 (Clariant), der Direktfarbstoff Levacell Violett BB fl. 40% (Lanxess) und der Azofarbstoff Bayscript Magenta LB fl. (Lanxess), verwendet.

Je nach Löslichkeit der Farbstoffe werden erfindungsgemäß weitere oberflächenaktive Substanzen eingesetzt, um die Farbstoffe zu lösen. Beispielsweise wird beim Einsatz eines Triaminotriphenylmethans vor Zugabe zu der erfindungsgemäßen Formulierung der Farbstoff mit Wasser und einer oberflächenaktiven Substanz vorzugsweise bei erhöhten Temperaturen (bis 70° C) gelöst. Als oberflächenaktive Substanz eignet sich beispielsweise ein nichtionisches grenzflächenaktives Mittel aus ethoxyliertem Alkohol (wie weitere oben beschrieben).

Natürliche Duftstoffe können beispielsweise ausgewählt sein aus der Gruppe bestehend aus Lavendel, Moschus, Zibet, Ambra, Castereum und ähnlichen Duftstoffen: Ajowaöl, Mandelöl, Ambrettesamen absol., Angelikawurzelöl, Anisol, Basilikumöl, Lorbeeröl, Benzoinresinoid, Bergamottessenz, Birkenöl, Rosenholzöl, Pfriemenkraut absol., Cajeputöl, Canangaöl, Gapiscumöl, Kümmelöl, Cardamonöl, Möhrensainenöl, Cassiaöl, Zedernholzöl, Selleriesamenöl, Zimtrindenöl, Zitronellöl, Muskattellersalbeiöl, Nelkenöl, Kognaköl, Korianderöl, Cubebenöl, Kampferöl, Dillöl, Estragonöl, Eukalyptusöl, Fenchelöl süß, Calbanumresinoid, Knoblauchöl, Geraniumöl, Ingweröl, Grapefruitöl, Hopfenöl, Hyacinthe absol., Jasmin absol., Wacholderbeerenöl, Labdanumresinoid, Lavandelöl, Lorbeerblätteröl, Zitronenöl, Lemonengrasöl, Liebstöckelöl, Macisöl, Mandarinenöl, Nfisoma absol., Myrrhe absol., Senföl, Narcisse absol., Neroliöl, Muskatnußöl, Eichenmoos absol., Olibanum-resinoid, Zwiebelöl, Opoponaxresinoid, Orangenöl, Orangenblütenöl, Iris konkret, Pfefferöl, Pfefferminzöl, Perubalsam, Petitgrainöl, Fichtennadelöl, Rose absol., Rosenöl, Rosmarinöl, Sandelholzöl, Salbeiöl, Krauseminzöl, Styraxöl, Thymianöl, Tolubalsam, Tonkabohnen absol., Tuberose absol., Terpentinöl, Vanilleschoten absol., Vetiveröl, Veilchenblätter absol., Ylang-Ylang-Öl und ähnliche Pflanzenöle usw. und deren Mischungen.

Als synthetische Duftstoffe können der erfindungsgemäßen Formulierung zugefügt werden: Pinen, Limonen und ähnliche Kohlenwasserstoffe, 3,3,5-Trimethylcyclohexanol, Linalool, Geraniol, Nerol, Citronellol, Menthol, Borneol, Borneylmethoxycyclohexanol, Benzylalkohol, Anisalkohol, Zimtalkohol, ß-Phenylethylalkohol, cis-3-Hexanol, Terpineol und ähnliche Alkohole; Anethole, Moschusxylol, Isoeugenol, Methyleugenol und ähnliche Phenole; Amylzimtaldehyd, Anisaldehyd, n-Butyraldehyd, Cuminaldehyd, Cyclamenaldehyd, Decylaldehyd, Isobutyraldehyd, Hexylaldehyd, Heptylaldehyd, n-Nonylaldehydnonadienol, Citral, Citronellal, Hydroxycitronellal, Benzaldehyd, Methylnonylacetaldehyd, Zimtaldehyd, Dodecanol, Hexylzimtaldehyd, Undekanal, Heliotropin, Vanillin, Ethylvanillin und ähnliche Aldehyde, Methylamylketon, Methyl-ß-naphthylketon, Methylnonylketon, Moschusketon, Diacetyl, Acetylpropionyl, Acetylbutyryl, Carvon, Methon, Campher, Acetophenon, p-Methylacetophenon, Jonon, Methylionon und ähnliche Ketone; Amylbutyrolacton, Diphenyloxid, Methylphenylglycidat, Nonylaceton, Cumarin, Cineol, Ethylmethylphenylglycidat und ähnliche Lactone bzw. Oxide, Methylformat, Isopropylformiat, Linalylforniat, Ethylacetat, Octylacetat, Methylacetat, Benzylacetat, Cinnamylacetat, Butylpropionat, Isoamylacetat, Isopropyl-isobutyrat, Geranylisovalerat, Allyleapronat Butylheptylat, Octylcaprylat, Methylheptincarboxylat, Methyloctincarboxylat, Isoamylcaprylat, Methyllaurat, Ethylmyristat, Methylmyristat, Ethylbenzoat, Benzylbenzoat, Methylcarbinylphenylacetat, Isobutylphenylacetat, Methyleinnamat, Styracin, Methylsalicylat, Ethylanisat, Methylanthranilat, Ethylpyruvat, Ethylbutylbutyrat, Benzylpropionat, Butylacetat, Butylbutyrat, p-tert.-Butylcyclohexylacetat Cedrylacetat, Citronellylacetat, Citronellylformiat, p-Cresylacetat, Ethylbutyrat, Ethylcaproat, Ethylcinnamat, Ethylphenylacetat, Ethylenbrassylat, Geranylacetat, Geranylformiat, Isoamylsalicylat, Isoarnylvalerat, Isobomylacetat, Linalylacetat, Methylanthranilat, Methyldihydrojasmonat, Nonylacetat, ß-Phenylethylacetat, Trichlormethylenphenylcarbinylacetat, Terpinylacetat, Vetiverylacetat und ähnliche Ester. Diese Duftstoffe können einzeln verwendet werden oder mindestens zwei davon können im Gemisch miteinander verwendet werden. Neben dem Duftstoff kann die erfindungsgemäße Formulierung gegebenenfalls zusätzlich die in der Duftstoffindustrie üblichen Zusatzstoffe, wie Patchouliöl bzw. ähnliche flüchtigkeitshemmende Mittel, wie Eugenol bzw. ähnliche viskositätsregulierende Mittel enthalten.

Die erfindungsgemäßen Formulierung können auch desodorierende Mittel enthalten, wie z.B. Laurylmethacrylat, Geranylcrotonat, Acetophenon-myristat, p-Methylacetophenon-benzaldehyd, Benzylacetat, Benzylpropionat, Amylzimtaldehyd, Anisaldehyd, Diphenyloxid, Methylbenzoat, Ethylbenzoat, Methylphenylacetat, Ethylphenylacetat, Neolin, Safrol usw.

Bevorzugt sind die Duftstoffe bereits Bestandteil des nicht-wässrigen Lösungsmittels.

Generell umfasst die O/W-Formulierung vorzugsweise 1 bis 60 Gew.-%, noch bevorzugter 2 bis 40 Gew.-% eines Duftstoffs, stärker bevorzugt im Ausmaß von 5 bis 15 Gew.-%.

Als weitere bevorzugte Ausführungsform der Erfindung umfasst die O/W-Formulierung vorzugsweise 0,01 bis 5 Gew.-%, noch bevorzugter 0,01 bis 1 Gew.-% eines Farbstoffs. Alle sich auf die O/W-Formulierung beziehenden Gewichtsprozentangaben der oben beschriebenen Komponenten ergeben in Summe höchstens 100%.

Gewünschtenfalls umfasst die erfindungsgemäße O/W-Formulierung weiterhin Additive oder Hilfsmittel, vorzugsweise Gefrierschutzmittel, Bitterstoffe, Stabilisatoren, Antischaummittel, Netzmittel Entschäumer und Konservierungsmittel. Beispiele für geeignete Gefrierschutzmittel sind Ethylenglycol, Monopropylenglycol, Glycerin, Hexylenglycol, 1-Methoxy-2-propanol, Cyclohexanol, insbesondere Monopropylenglycol. Als Bitterstoffe eignen sich insbesondere Aromaöle, vorzugsweise Pfefferminzöl, Eukalyptusöl, Bittermandelöl, Menthol, Fruchtaromastoffe, vorzugsweise Aromastoffe von Zitronen, Orangen, Limonen, Grapefruit oder Mischungen davon, und/oder Denatoniumbenzoat. Stabilisatoren, die gegebenenfalls der Formulierung zugesetzt werden, sind Säuren, vorzugsweise organische Säuren, wie Dodecylbenzolsulfonsäure, Essigsäure, Propionsäure oder Citronensäure, insbesondere Citronensäure, und Antioxidationsmittel, wie Butylhydroxytoluol (BHT), Butylhydroxyanisol (BHA), insbesondere Butylhydroxytoluol. Bevorzugte Antischaummittel und Entschäumer sind auf Silikon aufgebaut, besonders bevorzugt werden eine wässerige Emulsion von Dialkylpolysiloxanen, im Handel erhältlich als Rhodorsil® 426R von Rhodia Chimie Frankreich, Wacker SE-Reihe von Wacker, Deutschland, und ein Gemisch von Dialkylpolysiloxanen als ein Öl, im Handel erhältlich als Rhodorsil®; 416 vom Rhodia Chimie, Frankreich, Wacker 5184 oder Wacker SL von Wacker, Deutschland.

Optional enthalten die erfindungsgemäßen Formulierungen auch weitere funktionale Additive, welche die Brenn- oder weitere Eigenschaften von Trägermaterialien, die mit der erfindungsgemäßen Formulierung behandelt werden, beeinflussen. Als Beispiele solcher Zusatzstoffe können Phosphatsalze (wie z.B. Natriumphosphate, Monoammoniumphosphate), organische Säuren (z.B. Trinatriumcitrat, Trikaliumcitrat, Natriumacetat, Natriumtartrat, Bernsteinsäure, Malonsäure usw.) und Wachse erwähnt werden. Weitere Beispiele solcher Zusatzstoffe sind mineralische anorganische Substanzen wie Titaniumdioxid, Calciumcarbonat, Schichtsilikate wie Kaolin, sowie organische Füllstoffe wie mikrokristalline Zellulose.

Ein weiterer Gegenstand der Erfindung betrifft die Verwendung einer erfindungsgemäßen Formulierung zum Behandeln eines Trägermaterials.

Erfindungsgemäß wird unter "Behandeln" ein Vorgang bezeichnet, bei dem ein Trägermaterial mit der Formulierung in Kontakt gebracht wird. Eine geeignete Behandlungsmethoden ist das Imprägnieren beispielsweise durch Besprühen des Trägermaterials mit der erfindungsgemäßen Formulierung und anschließendem Trocknen, z. B. an der Luft, oder Tauchen des Trägermaterials in der erfindungsgemäßen Formulierung und anschließendem Trocknen, z. B. an der Luft. Weitere geeignete Imprägniermethoden sind Imprägnieren mittels einer Pipette. Als weitere geeignete und bevorzugte Behandlungsmethode eignet sich insbesondere das Bedrucken des Trägermaterials mit der erfindungsgemäßen Formulierung.

Bevorzugt setzt man zum Bedrucken des Trägermaterials mit der Formulierung etablierte Auftragsmethoden oder Beschichtungsanlagen für den kontinuierlichen Betrieb ein. Bespielweise sind geeignete Druckmethoden und entsprechende Anlagen bekannt aus der graphischen Industrie (direkte und indirekte Druckverfahren) sowie aus der Papierindustrie (Streich- und Imprägniermethoden). Weitere bekannte Anlagen/Methoden sind die Rakelpresse, die Filmpresse, die Leimpresse, das Vorhangstreichen und weitere.

Besonders bevorzugt werden Tiefdruckmethoden bei der die Übertragung der erfindungsgemäßen Formulierung direkt von der rotierenden Tiefdruckwalze auf das Trägermaterial erfolgt.

Überraschenderweise hat sich bei der vorliegenden Formulierung gezeigt, dass sich die Benetzung auf dem Trägermaterial, insbesondere wenn das Trägermaterial auf Cellulose basiert - d.h. wenn es ein Papier ist - steuern lässt. Dadurch ist es möglich solche Trägermaterialien einseitig mit der O/W-Formulierung zu bedrucken, ohne dass die O/W-Formulierung durch das Trägermaterial diffundiert. D.h. dass die nicht bedruckte Seite frei bleibt und beispielsweise mit Sicherheitshinweisen, bzw. einer Anwendungsbeschreibung bzw. dem Firmenlogo bedruckt werden kann.

Die Benetzung vom Trägermaterial mit der Formulierung lässt sich durch die Auswahl von dem nichtionischen ethoxylierten Emulgator oder durch Zusatz von ausgewählten Netzmitteln, welche gezielt die Oberflächenspannung der Formulierung beeinflussen, steuern.

Dafür geeignete Netzmittel sind niedrig-molekulare Varianten von nichtionischen ethoxylierten Alkoholen (wie beispielsweise Genapol X080 und Genapol T200 von Clariant), alkoxylierte Polysiloxane (wie Breakthru S240 von Evonik), Alkylpolyglucoside (wie Agnique PG 8105 von Cognis) oder anionische Tenside (wie Aerosol OT (Dioctylsulfosuccinate, Na-Salz) von Cytec).

In der Regel führt die hohe erforderliche Konzentration eines Brandsalzes in einer O/W-Formulierung zu einer physikalischen Instabilität und einer schnellen Aufrahmung und Abtrennung der Ölphase, so dass sich O/W-Formulierungen für den erfindungsgemäß erforderlichen Zweck normalerweise nicht eignen.

Überraschenderweise wurde durch die Bereitstellung der erfindungsgemäßen O/W-Formulierung nun gefunden, dass diese - trotz hohem Brandsalzgehalt - ausreichend physikalisch stabil ist. Die erfindungsgemäße O/W-Formulierung zeichnet sich durch eine feinteilige und stabile Dispergierung der Ölphase in der wässrigen Phase aus. Dadurch ist diese Formulierung ausreichend stabil gegenüber Koaleszens und Aufrahmung. Damit kann die erfindungsgemäße Formulierung auch für industrielle Druckverfahren eingesetzt werden.

Vorzugsweise werden feinteilige erfindungsgemäße O/W-Formulierungen mit einer Partikelgröße Dv50 < 10µm, besonders bevorzugt mit einer Partikelgröße Dv50 < 5µm und ganz besonders bevorzugt mit einer Partikelgröße Dv50 < 2 µm eingesetzt.

Die Partikelgröße Dv50 entspricht hier dem Medianwert der Volumenverteilung der Partikel, ermittelt mit einer Laserbeugungsgerät wie beispielweise dem MasterSizer 2000 von Malvern.

Vorteilhaft an der erfindungsgemäßen O/W-Formulierungen ist auch, dass bei Eintrocknung die Formulierungsrückstände - im Gegensatz zu Formulierungen mit hoch-molekularen polymeren Verdickern - auf der Tiefdruckwalze leicht mit Wasser oder mit üblichen wässrigen Reinigungsmittel entfernbar sind.

Es hat sich gezeigt, dass bei Anwendung einer herkömmlichen Tiefdruckmethode und des unten definierten bevorzugten Papierträgermaterials eine Binghamviskosität der erfindungsgemäßen O/W Formulierung von mindestens 20 mPa·s bei 20°C vorteilhaft ist.

Die Bestimmung der Binghamviskosität basiert auf der Messung der Schubspannung bei zunehmender Scherrate. Die resultierende Schubspannungswerte [Pa] werden gegen die Scherrate [s⁻¹] aufgetragen. Die Binghamviskosität wird bei höheren Scherraten abgeleitet als Steigung der Regressionsgerade.

Die Viskositätsmessung erfolgt bei einer Temperatur von 20°C mit einem Rotationsviskosimeter mit nach DIN EN ISO 321 genormten Messsystemen vom Zylinder Typ (auch Doppelspalt-Systeme) und definiert einstellbarer Schergeschwindigkeit, z. B. der Firmen Haake, Bohlin, Mettler, Contraves und andere. Das Viskosimeter sollte Messungen in einem Scherratenbereich von 0,1 bis 1200 s⁻¹ ermöglichen.

Als Trägermaterialien kommen erfindungsgemäß insbesondere feste brennbare Materialien wie Zellulosematerialien, Textilmaterialien, Kunststoffmaterialien etc. in Frage. Trägermaterialien auf Zellulosebasis sind zum Beispiel Papier, Pappe, Holz, Holzschnitzel, Holzspäne oder Sägemehl, Reishülsen, Spindeln des Maiskolbens (vorzugsweise ohne Körner), Pecanußschalen und Erdnussschalen. Auch dünne Spannplatten kommen als Trägermaterial in Frage. Ein entsprechender Träger auf Cellulosebasis ist beispielsweise in der deutschen Patentanmeldung DE 43 223 76 A1 beschrieben, deren Offenbarung unter Bezugnahme in die vorliegende Anmeldung eingeschlossen wird.

Trägermaterialien aus Textilmaterialien sind beispielsweise synthetische Fasern aus Polyester oder Nylon oder Naturfasern, wie Baumwolle, Viskose, ein Leinen-Viskose-Gemisch oder ein Gemisch aus synthetischen und Naturfasern wie Cellulose-Polyester (synthetisches Papier) oder Baumwolle-Polyester enthalten. Weitere Beispiele sind Woll-Feltine und Trevira-Satin.

Trägermaterialien aus Kunststoffmaterialien sind beispielsweise Polycarbonate, Polyester, Polyamide und Polyterephthalate.

Im Rahmen der vorliegenden Erfindung ist die Verwendung von einem Trägermaterial auf Cellulosebasis insbesondere ein Papierträger besonders bevorzugt.

Grundsätzlich unterliegt der dabei verwendete Papierträger keinen besonderen Beschränkungen, so lange er im Allgemeinen dazu geeignet ist, mindestens einen entsprechenden insektiziden Wirkstoff aufzunehmen und nach einem Anzünden und einem Erlöschen des Papierträgers den mindestens einen insektiziden Wirkstoff, ohne ihn im Wesentlichen zu zersetzen, freizusetzen.

Es hat sich jedoch herausgestellt, dass Papierträger mit einem Papiergewicht von vorzugsweise 25 bis 300 g/m², insbesondere 25 bis 270 g/m², besonders bevorzugt 25 bis 250 g/m², ganz besonders bevorzugt 25 bis 230 g/m², weiter ganz besonders bevorzugt 25 bis 215 g/m², speziell 25 bis 200 g/m², für den erfindungsgemäßen Zweck besonders geeignet sind.

Darüber hinaus ist es bevorzugt, wenn die Dicke des Papierträgers in einem Bereich von 0,05 bis 0,50 mm, besonders bevorzugt 0,07 bis 0,40 mm, ganz besonders bevorzugt 0,08 bis 0,35, weiter ganz besonders bevorzugt zwischen 0,08 und 0,25 mm, speziell 0,08 bis 0,20 mm, liegt.

Geeignete Trägermaterialien sowie Verfahren zum Behandeln der Trägermaterialien sind auch in der Offenlegungsschrift WO2007/131679A2 beschrieben.

Ein weiterer Gegenstand der vorliegenden Erfindung betrifft die Verwendung der erfindungsgemäßen Öl-in-Wasser Formulierung zum Behandeln eines Trägermaterials. Vorzugsweise erfolgt das "Behandeln" durch Bedrucken des Trägermaterials. Noch bevorzugter erfolgt das Bedrucken des Trägermaterials über eine Tiefdruckverfahren, vorzugsweise durch ein "Einschritt"-Bedruckungsprozess.

Ein weiterer Gegenstand der vorliegenden Erfindung bezieht sich auf ein Trägermaterial, welches mit einer erfindungsgemäßen Öl-in-Wasser Formulierung behandelt wurde.

Es ist bevorzugt, wenn das Auftragsgewicht der (O/W)-Formulierung auf den Träger (insbesondere dem Papierträger) in einem Bereich von 5 bis 30 ml/m², besonders bevorzugt von 12 bis 22 ml/m² und ganz besonders bevorzugt von 15 bis 20 ml/m² liegt.

Der Gehalt an insektizidem Wirkstoff auf einem erfindungsgemäßen Trägermaterial, insbesondere einem Papierträger, ist vorzugsweise zwischen 0,05 bis 5,0 Gew.-%, noch bevorzugter zwischen 0,1 bis 2,5 Gew.-% und besonders bevorzugt zwischen 0,2 und 1,5 Gew.-%.

Es ist bevorzugt, wenn der Brandsalz-Gehalt des behandelten Trägermaterials (insbesondere eines Papierträgers) in einem Bereich von 0,1 bis 6 Gew.-%, besonders bevorzugt von 1 bis 5 Gew.-% und ganz besonders bevorzugt von 1,5 bis 3 Gew.-% liegt.

Generell umfasst das erfindungsgemäße Trägermaterial (insbesondere ein Papierträger) vorzugsweise 0,02 bis 2,0 Gew.-%, noch bevorzugter 0,1 bis 1,5 Gew.-%, besonders bevorzugt 0,1 bis 1,0 Gew.-%, mindestens eines oben beschriebenen Polyvinylalkohols.

Generell umfasst das erfindungsgemäße Trägermaterial (insbesondere ein Papierträger) vorzugsweise 0,02 bis 2,0 Gew.-%, noch bevorzugter 0,1 bis 1,5 Gew.-%, besonders bevorzugt 0,1 bis 1,0 Gew.-%, mindestens eines oben beschriebenen nichtionischen ethoxylierten Emulgators. Es ist bevorzugt, dass das behandelte Trägermaterial einen Duftstoff enthält, welcher den Geruch des glimmbaren Endproduktes vor und nach Verglimmung positiv beeinflusst.

Es ist bevorzugt, wenn der Duftstoff-Gehalt des behandelten Trägermaterials (insbesondere eines Papierträgers) in einem Bereich von 0,1 bis 10 Gew.-% , besonders bevorzugt von 0,5 bis 5 Gew.-% und ganz besonders bevorzugt von 1,0 bis 3 Gew.-% liegt. Die verbleibenden, sich bis auf höchstens 100% aufsummierenden Gewichtsprozentanteile beziehen sich auf das Trägermaterial (vorzugsweise auf ein Papierträger) selber.

Ein weiterer Gegenstand der Erfindung betrifft eine Methode zur Herstellung der erfindungsgemäßen Öl-in-Wasser Formulierung umfassend folgende Schritte:
1) Eindispergieren von mindestens einem Polyvinylalkohol in Wasser (bevorzugt nicht höher als bei Raumtemperatur; 25°C) und Auflösen durch Temperaturerhöhung (vorzugsweise auf 70°C unter Rühren), der mindestens ein Polyvinylalkohol eine Viskosität nach DIN 53015 von 1 bis 60 mPa • s und eine Esterzahl nach DIN EN ISO 3681 zwischen 40 und 450 hat und
   Eindispergieren von mindestens einem nichtionischen ethoxylierten Emulgator (bevorzugt in flüssiger Form) in Wasser, wobei der nichtionische ethoxylierte Emulgator ein Alkanolethoxylat oder ein Ethyleneoxid/Propylenoxidblockcopolymer ist,
2) Auflösen eines Brandsalzes in Wasser (bevorzugt bei erhöhter Temperatur; > 50°C) und
3) Mischen von der Polyvinyllösung und der Emulgatorlösung aus Schritt 1) mit der Brandsalzlösung aus Schritt 2),
4) Lösen mindestens eines insektiziden Wirkstoffs in mindestens einem nicht-wässrigen Lösungsmittel,
5) Emulgieren der Lösung gemäß Schritt 3) mit der nicht-wässrigen Lösung aus Schritt 4).

Falls optional weitere wasserlösliche Formulierungskomponenten (wie z.B. kationische oder anionische Farbstoffe, weitere Additive) Bestandteil der O/W-Formulierung werden sollen, werden diese vorzugsweise gleichzeitig mit dem Brandsalz in Schritt 2) zum Wasser dazugegeben und aufgelöst.

Falls optional weitere wasser-unlösliche flüssige Formulierungskomponenten (wie beispielsweise Duftstoffe, weitere Additive) Bestandteil der O/W-Formulierung werden sollen, dann werden diese vorzugsweise in Schritt 4) zu dem nicht-wässrigen Lösungsmittel dazugemischt.

Das Vermischen zu einer erfindungsgemäßen O/W-Formulierung in Schritt 5) erfolgt vorzugsweise durch Homogenisierung über intensives Rühren, bevorzugt über ein herkömmliches Emulgierverfahren (z.B. mit einer Rotor-Stator-Dispergiermachine).

Ein weiter Gegenstand der vorliegenden Erfindung bezieht sich auf ein insektizides, glimmbares Produkt umfassend ein oben beschriebenes Trägermaterial sowie die Bestandteile der oben beschriebenen erfindungsgemäßen Wasser-in-Öl Formulierung, wobei das nicht-wässrige Lösungsmittel bei der Herstellung (z.B. bei einem der Herstellung nachgelagerten Trocknungsschritt oder später) aus dem Trägermaterial evaporieren kann.

Ein weiterer Gegenstand der Erfindung ist eine Methode zur Herstellung eines insektiziden, glimmbaren Produktes, dadurch gekennzeichnet, dass auf das Trägermaterial eine erfindungsgemässe Öl-in-Wasser Formulierung appliziert wird. Vorzugsweise erfolgt die Herstellung durch Bedrucken des Trägermaterials mit der erfindungsgemäßen Öl-in-Wasser Formulierung. Noch bevorzugter erfolgt das Bedrucken des Trägermaterials über eine Tiefdruckverfahren, vorzugsweise durch ein "Einschritt"-Bedruckungsprozess.

### Beispiele:

### Beispiel 1: Beschreibung der Herstellung der erfindungsgemäßen Formulierungen

Es wurden gemäß oben angegebenem Herstellungsvorschrift (siehe Seite 19) folgende erfindungsgemäßen Formulierungen 1 und 2 mit Transfluthrin angesetzt.

**Tabelle 1: Angabe der Formulierungskomponenten in Gewichtsprozenten bezogen auf die erfindungsgemäße O/W Formulierung 1.**

| **Formulierung** | **Formulierung 1** |
|---|---|
| **Formulierungskomponente** | **Gew. %** |
| BenjoIFF Lav 870 | 10 |
| Tranfluthrin | 3,3 |
| Genapol T800 | 2 |
| Rhodorsil 426R | 0,1 |
| Genagen 4296* | 5 |
| Mowiol 3-85* | 4 |
| Kaliumnitrat | 12,5 |
| Genapol T200 | 1,5 |
| Ceracyl Magenta (Triaminotriphenylmethan) | 0,3 |
| Denatoniumbenzoat | 0,06 |
| Wasser | 61,24 |
| Summe | 100 |

Bei der Herstellung von Formulierung 1 wurde der Bitterstoff Denatoniumbenzoat, das Antischaummittel Rhodorsil 426R (Rhodia) sowie der Emulgator T800 (beide von Clariant) der wässrigen Phase mit gelöstem Polyvinylalkohol (Mowiol 3-85, Kuraray Specialties Europe) und Brandsalz (KNO₃) zugesetzt. Anschließend wurde dieser Lösung mit einer wässrigen Magenta-Vorlösung (Ceracryl Magenta, DixonChew, solubilisiert in einer wässrigen Genapol T200-Lösung bei 70°C) vermischt.

Eine Vormischung aus Transfluthrin, dem Parfumöl BenjoIFF Lav 870 (IFF BV) und dem Lösungsmittel Genagen 4296 (Clariant) wurde der wässrige Phase zugesetzt. Die anschließende Emulgierung wurde mit einer Dispergiermachine (Ultraturrax T25 digital, IKA) durchgeführt.

Die Herstellung von Formulierung 2 (basierend auf Rapsölmethylester (Synative ES ME SU, Cognis) anstatt auf Genagen 4296) wurde analog wie die Herstellung der Formulierung 1 durchgeführt.

**Tabelle 2: Angabe der Formulierungskomponenten in Gewichtsprozenten bezogen auf die erfindungsgemäße O/W Formulierung 2.**

| **Formulierung** | **Formulierung 2** |
|---|---|
| **Formulierungskomponente** | **Gew. %** |
| BenjoIFF Lav 870 | 10 |
| Tranfluthrin | 3,3 |
| Genapol T800 | 2 |
| Rhodorsil 426R | 0,2 |
| Synative ES ME SU | 15 |
| Mowiol 3-85* | 2 |
| Kaliumnitrat | 12,5 |
| Ceravon Fast Rhodamine B | 1 |
| Denatoniumbenzoat | 0,06 |
| Wasser | 53,94 |
| Summe | 100 |

Zum Vergleich wurde auch folgende nicht-erfindungsgemäße Formulierung K (Fl K) mit Transfluthrin nach der auf S. 19 angegebenem Herstellungsvorschrift angesetzt:

**Tabelle 3: Angabe der Formulierungskomponenten in Gewichtsprozenten bezogen auf die nicht-erfindungsgemäße O/W Formulierung K (Fl K).**

| **Formulierung** | **Fl K** |
|---|---|
| **Formulierungskomponente** | **Gew. %** |
| Transfluthrin technisch | 3,30 |
| OM 2044 (Duftstoff, IFF Inc.) | 9,60 |
| Solvesso 100 | 12,50 |
| Tween 80 | 7,65 |
| Kaliumnitrat | 12,50 |
| Wasser | 54,45 |
| Summe | 100,00 |

Zur Charakterisierung beider Formulierungen wurde die Partikelgröße, die spezifische Leitfähigkeit und die Viskosität ermittelt. Die Partikelgrößenverteilung wurde mit Hilfe eines Mastersizers 2000 (Malvern) und die spezifische Leitfähigkeit mit Hilfe eines Laborgeräts von Knick (Portamess® 911 Cond in Kombination mit Leitfähigkeitssensor SE 204) bestimmt. Die Binghamviskosität der homogenisierten Formulierungen wurde mit einem Rheometer von Haake (Haake RS-150, Sensor Z20 Din Ti) bei 20°C gemessen.

Die Ergebnisse aus Tabelle 3 zeigen, dass beide erfindungsgemäßen Formulierungen Fl 1 und Fl 2 feinteilige O/W-Emulsionen sind.

**Tabelle 3: Partikelgröße, Binghamviskosität und spezifische Leitfähigkeit der gemäß Beispiel 1 hergestellten Formulierungen Fl 1, Fl 2 und Fl K.**

| **Formulierung** | **Fl 1** | **Fl 2** | **Fl K** |
|---|---|---|---|
| Partikelgröße Dv50 (µm) | 0,4 | 0,8 | - |
| Binghamviskosität (mPa.s) | 27 | 22 | 12 |
| spezifische Leitfähigkeit | > 40 mS/cm | > 40 mS/cm | >40 mS/cm |
| Typ der Emulsion | O/W | O/W | O/W |

### Beispiel 2: Beschreibungen der Herstellung des erfindungsgemäßen insektiziden, glimmbaren Produkts

Zur Herstellung der insektiziden Papiere wurden die in Beispiel 1 beschriebenen Wirksstoffformulierungen (Fl 1, Fl 2 und Fl K als Kontrolle) in einem Tiefdruckverfahren mit definiertem Auftragsgewicht auf das Trägermaterial vollflächig und homogen aufgetragen. Als Trägermaterial wurde das Offsetpapier Tauro Offset 90 gm (Robert Horn Group) eingesetzt. Die Auftragung der Formulierungen erfolgte in einem Schritt mit dem Bedruckbarkeitsprüfer PhantomQD™ Proofer (HARPER Graphics GmbH) und dem Rasterwalze 306 140 100 20.0C (theoretisches Schöpfvolumen ca. 31 cm³/m² und 60 Grad Gravurwinkel, HARPER Graphics GmbH). Die Formulierung wurde mit konstantem Druck und mit einem Auftragsgewicht von etwa 16 g/m² direkt von der Tiefdruckwalze auf ein Papierstreifen übertragen. Die bedruckten Papierstreifen wurden mindestens eine Stunde an der Raumluft getrocknet und anschließend auf Druckqualität (über visuelle Bewertung der Homogenität der Papiereinfärbung) und Glimmverhalten geprüft.

Das Glimmverhalten wurde dadurch überprüft, dass man die beschichteten Papierstreifen in Längsrichtung faltet, auf einer Seite anzündet, die resultierende Flamme ausblast und es auf einem feuerfesten Substrat zum kompletten Verglimmen hinstellt. Die Vollständigkeit des Verglimmens oder Verschwelens vom Papierstreifen gilt als Maß für das Glimmverhalten des beschichteten Papierstreifens.

**Tabelle 4: Qualität der Beschichtung und Glimmverhalten der gemäß Beispiel 2 hergestellten insektiziden, glimmbaren Produkte.**

| **Insektizides, glimmbares Produkt** | | | |
|---|---|---|---|
| **aufgetragene Formulierung** | **Fl 1** | **Fl 2** | **Fl K** |
| Auftragsgewicht (g/m²) | 16 | 16 | 16 |
| Qualität der Beschichtung | homogen | homogen | inhomogen |
| Glimmverhalten | vollständig | vollständig | nichtvollständig |

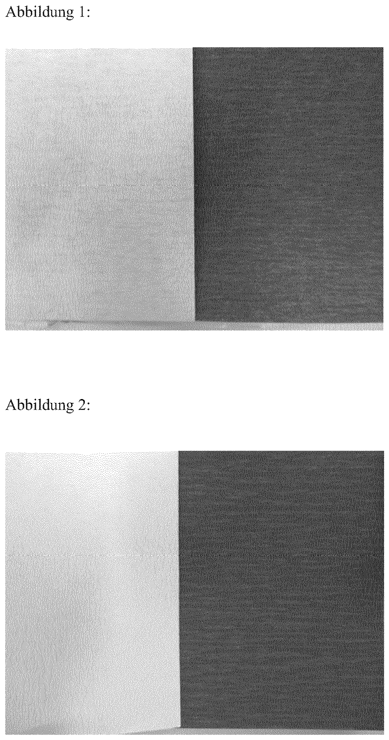

Die Abbildung 1 zeigt, die Qualität der Beschichtung der gemäß Beispiel 2 hergestellten insektiziden, glimmbaren Produkte, aufgetragene Formulierung 1 (unbedruckte Rückseite links; bedrückte Seite rechts). Die erfindungsgemäße O/W-Formulierung diffundiert nicht durch das Trägermaterial. Bei der in Abbildung 2 dargestellten und gemäß Beispiel 2 hergestellten insektiziden, glimmbaren Produkte wurde die Formulierung 2 aufgetragen (unbedruckte Rückseite links; bedrückte Seite rechts).

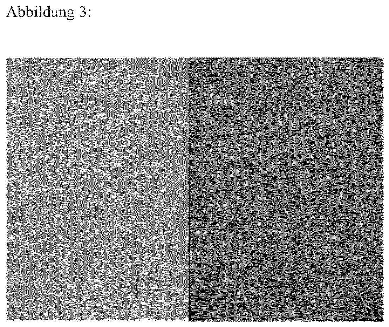

Bei der in Abbildung 3 dargestellten und gemäß Beispiel 1 (Fl K) hergestellten insektiziden, glimmbaren Produkte (nicht-erfindungsgemäß) wurde die Formulierung Fl K aufgetragen (unbedruckte Rückseite links; bedrückte Seite rechts). Diese Formulierung diffundiert zumindest teilweise durch das Trägermaterial hindurch.

### Beispiel 3: Beschreibung der Herstellung einer erfindungsgemäßen Formulierung ohne Duftstoff

Analog Beispiel 1 wurde gemäß oben angegebenem Herstellungsvorschrift (siehe Seite 19) folgende erfindungsgemäßen Formulierung 3 (Fl 3) ohne Duftstoffe mit Transfluthrin angesetzt.

**Tabelle 5: Angabe der Formulierungskomponenten in Gewichtsprozenten bezogen auf die Formulierung 3 (Fl 3) ohne Duftstoffe.**

| **Formulierung** | **Fl 3** |
|---|---|
| **Formulierungskomponente** | **Gew. %** |
| Transfluthrin | 3,1 |
| Genapol T800 | 2,0 |
| Genagen 4296* | 25,0 |
| Mowiol 3-85* | 2,0 |
| Kaliumnitrat | 12,5 |
| Genapol T200 | 1,0 |
| Ceravon Fast Rhodamine B | 0,3 |
| Wasser | 54,1 |
| Summe | 100,00 |

Analog wie in Beispiel 2 beschrieben wurde die Formulierung 3 zur Herstellung eines insektiziden Papiers verwendet. Die Auftragung der Formulierungen erfolgte in einem Schritt mit dem Bedruckbarkeitsprüfer PhantomQD™ Proofer (HARPER Graphics GmbH) und dem Rasterwalze 306 140 100 20.0C (theoretisches Schöpfvolumen ca. 31 cm³/m² und 60 Grad Gravurwinkel, HARPER Graphics GmbH) auf das Offsetpapier Tauro Offset 90 gm (Robert Horn Group). Die O/W-Formulierung mit einer spezifischen Leitfähigkeit > 0,1 mS/cm wurde mit konstantem Druck und mit einem Auftragsgewicht von effektiv etwa 8 g/m² von der Tiefdruckwalze über eine Offsetwalze auf ein Papierstreifen übertragen. Nach anschließender Trockung an der Raumluft wurde ein homogen eingefärbtes insektizides Papier erhalten. Das insektizide Papier verglimmte vollständig.

## Patentansprüche

1. Eine Öl-in-Wasser Formulierung umfassend
a) mindestens ein Polyvinylalkohol und ein nichtionischer ethoxylierter Emulgator, wobei das mindestens eine Polyvinylalkohol eine Viskosität nach DIN 53015 von 1 bis 60 mPa • s und eine Estezahl nach DIN EN ISO 3681 zwischen 40 und 450 hat und der nichtionische ethoxylierte Emulgartor ein Alkanolethoxylat oder ein Ethyleneoxid/Propylenoxidblockcopolymer ist,
b) mindestens ein nicht-wässriges Lösungsmittel,
c) mindestens ein Brandsalz,
d) mindestens ein insektizider Wirkstoff, wobei der mindestens ein insektizider Wirkstoff ein Pyrethroid ist,
und
e) Wasser.

2. Eine Öl-in-Wasser Formulierung gemäß Anspruch 1, **dadurch gekennzeichnet, dass** das Brandsalz Kaliumnitrat ist.

3. Eine Öl-in-Wasser Formulierung gemäß einem der vorherigen Ansprüche, **dadurch gekennzeichnet, dass** die Formulierung weiter mindestens einen Farbstoff und/oder mindestens einen Duftstoff enthält.

4. Verwendung einer Öl-in-Wasser Formulierung nach einem der vorherigen Ansprüche zum Behandeln eines Trägermaterials.

5. Trägermaterial, auf welches eine Öl-in-Wasser Formulierung nach einem der Ansprüche 1 bis 3 appliziert ist.

6. Trägermaterial nach Anspruch 5, **dadurch gekennzeichnet, dass** das Trägermaterial ein Papierträger ist.

7. Methode zur Herstellung der erfindungsgemäßen Öl-in-Wasser Formulierung umfassend folgende Schritte
1) Eindispergieren von mindestens einem Polyvinylalkohol in Wasser und Auflösen durch Temperaturerhöhung, wobei das mindestens eine Polyvinylalkohol eine Viskosität nach DIN 53015 von 1 bis 60 mPa • s und eine Esterzahl nach DIN EN ISO 3681 zwischen 40 und 450 hat
und
eindispergieren von mindestens einem nichtionischen ethoxylierten Emulgator in Wasser, wobei der nichtionische ethoxylierte Emulgator ein Alkanolethoxylat oder ein Ethyleneoxid/Propylenoxidblockcopolymer ist,
2) Auflösen eines Brandsalzes in Wasser,
3) Mischen von der Polyvinylalkohollösung und der Emulgatorlösung aus Schritt 1) mit der Brandsalzlösung aus Schritt 2),
4) Lösen mindestens eines insektiziden Wirkstoffs in mindestens einem nicht-wässrigen Lösungsmittel, wobei der mindestens eine insektizide Wirkstoff ein Pyrethroid ist,
5) Emulgieren der Lösung gemäß Schritt 3) mit der nicht-wässrigen Lösung aus Schritt 4).

8. Insektizides, glimmbares Produkt umfassend
a) ein Trägermaterial,
b) mindestens ein Polyvinylalkohol und mindestens ein nichtionischer ethoxylierter Emulgator, wobei das mindestens eine Polyvinylalkohol eine Viskosität nach DIN 53015 von 1 bis 60 mPa • s und eine Esterzahl nach DIN EN ISO 3681 zwischen 40 und 450 hat und der nichtionische ethoxylierte Emulgator ein Alkanolethoxylat oder ein Ethyleneoxid/Propylenoxidblockcopolymer ist,
c) mindestens ein Brandsalz,
d) mindestens ein insektizider Wirkstoff, wobei der mindestens eine insektizide Wirkstoff ein Pyrethroid ist und
e) Wasser.

9. Methode zur Herstellung eines Trägermaterials gemäß Anspruch 5, 6 oder einem insektiziden, glimmbaren Produkt gemäß Anspruch 8, **dadurch gekennzeichnet, dass** auf ein Trägermaterial eine Öl-in-Wasser Formulierung nach einem der Ansprüche 1 bis 3 appliziert wird.

10. Methode nach Anspruch 9, **dadurch gekennzeichnet, dass** das Trägermaterial mit einer Öl-in-Wasser Formulierung nach einem der Ansprüche 1 bis 3 bedruckt wird.

11. Methode nach Anspruch 10, **dadurch gekennzeichnet, dass** das Trägermaterial mit einer Öl-in-Wasser Formulierung nach einem der Ansprüche 1 bis 3 mittels einer Tiefdruckmethode in einem Einschrittprozess bedruckt wird.

## Claims

1. Oil-in water formulation comprising
a) at least one polyvinyl alcohol and a non-ionic ethoxylated emulsifier, wherein the at least one polyvinyl alcohol has a DIN 53015 viscosity of 1 to 60 mPa.s and a DIN EN ISO 3681 ester number between 40 and 450 and the nonionic ethoxylated emulsifier is an alkanol ethoxylate or an ethylene oxide/propylene oxide block copolymer,
b) at least one nonaqueous solvent,
c) at least one burning salt,
d) at least one insecticidal active substance, wherein the at least one insecticidal active substance is a pyrethroid,
and
e) water.

2. Oil-in-water formulation according to Claim 1, **characterized in that** the burning salt is potassium nitrate.

3. Oil-in-water formulation according to one of the preceding claims, **characterized in that** the formulation additionally comprises at least one colorant and/or at least one fragrance.

4. Use of an oil-in-water formulation according to one of the preceding claims for treating a support.

5. Support to which an oil-in-water formulation according to one of Claims 1 to 3 has been applied.

6. Support according to Claim 5, **characterized in that** the support is a paper support.

7. Process for the preparation of the oil-in-water formulation according to the invention, comprising the following steps:
1) dispersing at least one polyvinyl alcohol in water and dissolving by increasing the temperature, wherein the at least one polyvinyl alcohol has a DIN 53015 viscosity of 1 to 60 mPa.s and a DIN EN ISO 3681 ester number between 40 and 450
and
dispersing at least one nonionic ethoxylated emulsifier in water, wherein the nonionic ethoxylated emulsifier is an alkanol ethoxylate or an ethylene oxide/propylene oxide block copolymer,
2) dissolving a burning salt in water,
3) mixing the polyvinyl alcohol solution and the emulsifier solution of step 1) with the burning salt solution of step 2),
4) dissolving, in at least one nonaqueous solvent, at least one insecticidal active substance, wherein the at least one insecticidal active substance is a pyrethroid,
5) emulsifying the solution of step 3) with the nonaqueous solution of step 4).

8. Insecticidal, smoulderable product, comprising
a) a support,
b) at least one polyvinyl alcohol and at least one non-ionic ethoxylated emulsifier, wherein the at least one polyvinyl alcohol has a DIN 53015 viscosity of 1 to 60 mPa.s and a DIN EN ISO 3681 ester number between 40 and 450 and the nonionic ethoxylated emulsifier is an alkanol ethoxylate or an ethylene oxide/propylene oxide block copolymer,
c) at least one burning salt,
d) at least one insecticidal active substance, wherein the at least one insecticidal active substance is a pyrethroid, and
e) water.

9. Process for the preparation of a support according to Claim 5, 6 or an insecticidal smoulderable product according to Claim 8, **characterized in that** an oil-in-water formulation according to one of Claims 1 to 3 is applied to a support.

10. Process according to Claim 9, **characterized in that** the support is printed with an oil-in-water formulation according to one of Claims 1 to 3.

11. Process according to Claim 10, **characterized in that** the support is printed with an oil-in-water formulation according to one of Claims 1 to 3 by means of a gravure process in a one-step process.

## Revendications

1. Formulation huile dans eau, comprenant :
a) au moins un alcool polyvinylique et un émulsifiant éthoxylé non ionique, ledit au moins un alcool polyvinylique présentant une viscosité selon DIN 53015 de 1 à 60 mPa·s et un indice d'ester selon DIN EN ISO 3681 compris entre 40 et 450, et l'émulsifiant éthoxylé non ionique étant un éthoxylate d'alcanol ou un copolymère séquencé d'oxyde d'éthylène/oxyde de propylène,
b) au moins un solvant non aqueux,
c) au moins un sel régulateur de combustion,
d) au moins un agent actif insecticide, ledit au moins un agent actif insecticide étant un pyréthroïde, et
e) de l'eau.

2. Formulation huile dans eau selon la revendication 1, **caractérisée en ce que** le sel régulateur de combustion est le nitrate de potassium.

3. Formulation huile dans eau selon l'une quelconque des revendications précédentes, **caractérisée en ce que** la formulation contient en outre au moins un colorant et/ou au moins un parfum.

4. Utilisation d'une formulation huile dans eau selon l'une quelconque des revendications précédentes pour le traitement d'un matériau support.

5. Matériau support, sur lequel une formulation huile dans eau selon l'une quelconque des revendications 1 à 3 est appliquée.

6. Matériau support selon la revendication 5, **caractérisé en ce que** le matériau support est un support en papier.

7. Procédé de fabrication de la formulation huile dans eau selon l'invention, comprenant les étapes suivantes :
1) la dispersion d'au moins un alcool polyvinylique dans de l'eau et la dissolution par élévation de la température, ledit au moins un alcool polyvinylique présentant une viscosité selon DIN 53015 de 1 à 60 mPa·s et un indice d'ester selon DIN EN ISO 3681 compris entre 40 et 450,
et
la dispersion d'au moins un émulsifiant éthoxylé non ionique dans de l'eau, l'émulsifiant éthoxylé non ionique étant un éthoxylate d'alcanol ou un copolymère séquencé d'oxyde d'éthylène/oxyde de propylène,
2) la dissolution d'un sel régulateur de combustion dans de l'eau,
3) le mélange de la solution d'alcool polyvinylique et de la solution d'émulsifiant de l'étape 1) avec la solution de sel régulateur de combustion de l'étape 2),
4) la dissolution d'au moins une substance active insecticide dans au moins un solvant non aqueux, ladite au moins une substance active insecticide étant un pyréthroïde,
5) l'émulsion de la solution selon l'étape 3) avec la solution non aqueuse de l'étape 4).

8. Produit insecticide à combustion lente, comprenant :
a) un matériau support,
b) au moins un alcool polyvinylique et au moins un émulsifiant éthoxylé non ionique, ledit au moins un alcool polyvinylique présentant une viscosité selon DIN 53015 de 1 à 60 mPa·s et un indice d'ester selon DIN EN ISO 3681 compris entre 40 et 450, et l'émulsifiant éthoxylé non ionique étant un éthoxylate d'alcanol ou un copolymère séquencé d'oxyde d'éthylène/oxyde de propylène,
c) au moins un sel régulateur de combustion,
d) au moins un agent actif insecticide, ledit au moins un agent actif insecticide étant un pyréthroïde, et
e) de l'eau.

9. Procédé de fabrication d'un matériau support selon la revendication 5, 6 ou d'un produit insecticide à combustion lente selon la revendication 8, **caractérisé en ce qu'**une formulation huile dans eau selon l'une quelconque des revendications 1 à 3 est appliquée sur un matériau support.

10. Procédé selon la revendication 9, **caractérisé en ce que** le matériau support est imprimé avec une formulation huile dans eau selon l'une quelconque des revendications 1 à 3.

11. Procédé selon la revendication 10, **caractérisé en ce que** le matériau support est imprimé avec une formulation huile dans eau selon l'une quelconque des revendications 1 à 3 par une méthode d'héliogravure par un procédé à une étape.
